# EUROPEAN PATENT APPLICATION

(11) **EP 4 697 359 A2**
(43) Date of publication of application: **18.02.2026**
(21) Application number: 25196341.9
(22) Date of filing: 18.08.2025
(51) Int. Cl.: G21B 1/05, G21B 1/11

(54) **STELLARATOR DEVICE WITH SUPERCONDUCTING PLASMA CONFINEMENT COILS AND IMPROVED COIL SUPPORT STRUCTURE**

(30) Priority: 16.08.2024 EP 24195033; 30.08.2024 EP 24197718
(71) Applicant: Proxima Fusion GmbH, 81369 München (DE)
(72) Inventor: MAURIN, Victor, 81369 München (DE); ANGLES, Jean-claude, 81669 München (DE)
(74) Representative: Bardehle Pagenberg Partnerschaft mbB Patentanwälte Rechtsanwälte

(57) **Abstract**

The present disclosure relates to a stellarator (1) comprising: a plurality of non-planar, superconducting coils, for generating a magnetic field for confining a plasma inside a plasma vessel; and a coil support structure (30, 40, 50) comprising: a first structural arrangement (30) arranged between a center (20) of the stellarator and the plasma vessel and configured to balance a radial force exerted by the magnetic field on the plurality of coils; a second structural arrangement (40, 50) configured to balance local forces exerted by the magnetic field on one or more coil segments of the plurality of coils; wherein the local forces cause at least a toroidal motion and/or a toroidal deformation of the one or more segments of the plurality of coils, wherein the first structural arrangement (30) comprises one or more support rings (30), wherein a thickness of at least one of the one or more support rings (30) in a height direction of the stellarator (1) varies along a circumference of the stellarator in the toroidal direction of the stellarator.

## Description

### FIELD OF THE INVENTION

The present disclosure relates to the field of nuclear fusion devices, specifically to structural support systems for non-planar superconducting magnetic coils used for plasma confinement in stellarator nuclear fusion devices. The present disclosure pertains to a stellarator with superconducting plasma confinement coils and an improved coil support structure that enhances the mechanical stability of the stellarator's superconducting magnetic confinement system. The present disclosure also relates to a computer-implemented method for generating topology input data for optimizing a coil support structure of a stellarator and to a computer-implemented method for optimizing a coil support structure of a stellarator.

### BACKGROUND

In the field of plasma confinement for nuclear fusion, stellarators are a prominent type of device utilized to maintain the stability and confinement of high-temperature plasma. These devices employ complex magnetic fields generated by a series of non-planar magnetic coils to confine the fusion plasma in a toroidal plasma vessel, thereby facilitating the necessary conditions for nuclear fusion reactions. Specifically, the non-planar magnetic field coils often have complex geometries. Thus, the design and manufacturing of such coils and of corresponding coil support structures are an engineering challenge.

Known systems typically involve intricate coil arrangements which may be subjected to substantial forces exerted by the magnetic fields generated by the coils. This problem is substantially exacerbated by the substantial increase in magnetic field strength enabled by the much higher electric current density that can be achieved in the plasma confinement coils by using high-temperature superconductor technology, such as cuprate-based superconductors like YBCO. For such stellarator devices a primary objective is to achieve a stable and efficient confinement of the plasma, which is crucial for sustaining fusion reactions over extended periods. Despite the advancements in stellarator design, such as the development of sophisticated magnetic field configurations and improved plasma vessel materials, challenges remain in maintaining a stable coil configuration and structural integrity for superconductor-based stellarator devices in a cost-efficient and reliable manner.

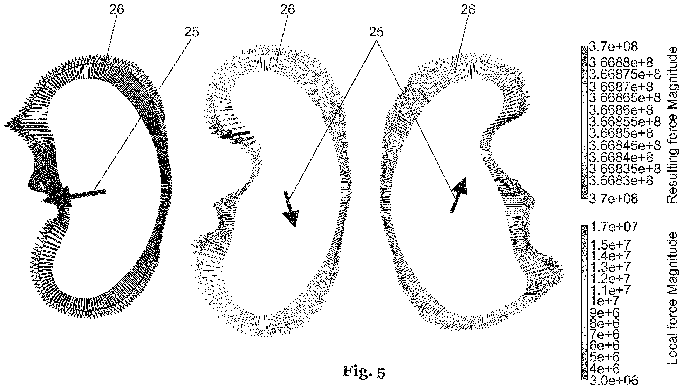

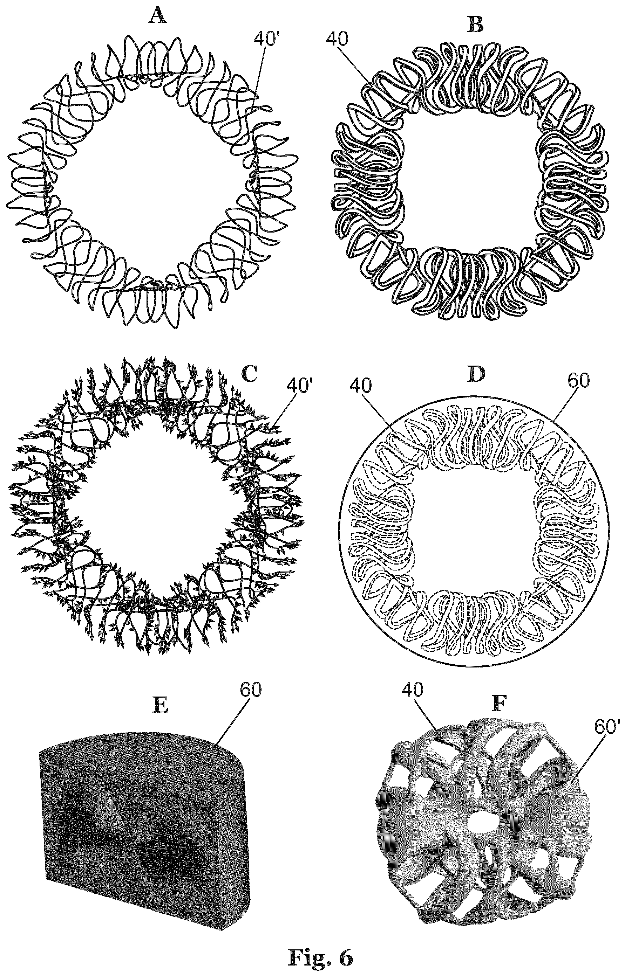

X. Gouzhen et al., "Preliminary design and analysis of the CFOS supporting structure" , Fusion Engineering and Design, vol. 160, 29 September 2020, discusses design and construction of the Chinese First Quasi-axisymmetric Stellarator with an aspect ratio Aₚ=4.0 and magnetic field strength Bt=1.0 T. The publication notes that the low Ap makes it quite challenging to design a supporting structure because of the limited space and strong electromagnetic (EM) force and suggests a cage-like supporting structure is proposed for the CFQS modular coil (MC) system. Fig. 6 shows a detailed structure of top/bottom supports denoted as "support rings". The support rings have a fixed circumference. Fig. 5 shows that the support rings are arranged above and below the plasma vessel, not arranged between a center of the stellarator and the plasma vessel.

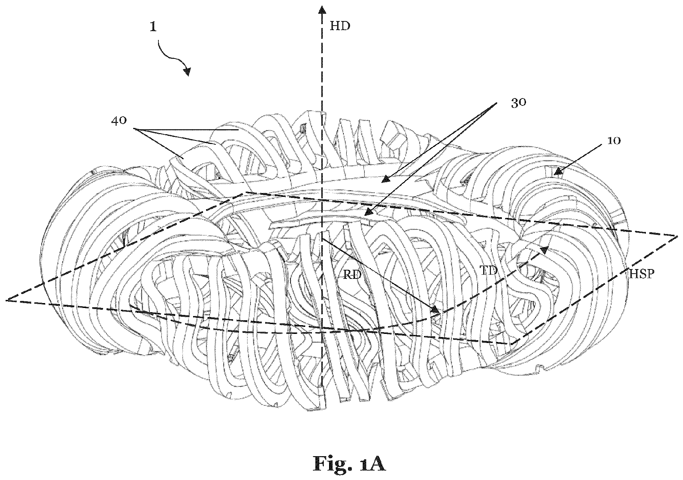

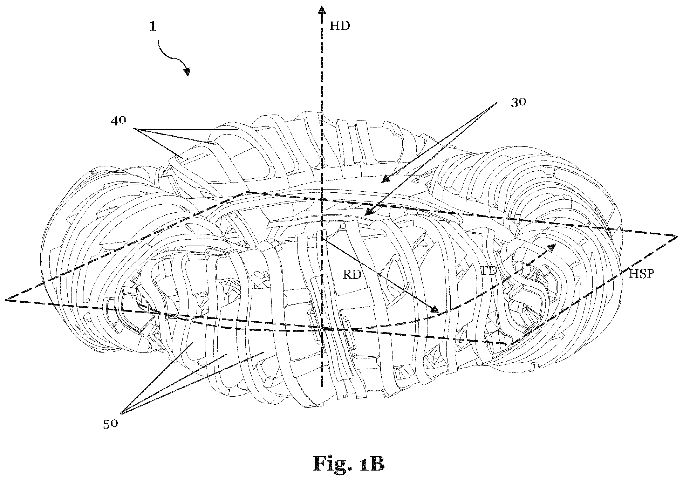

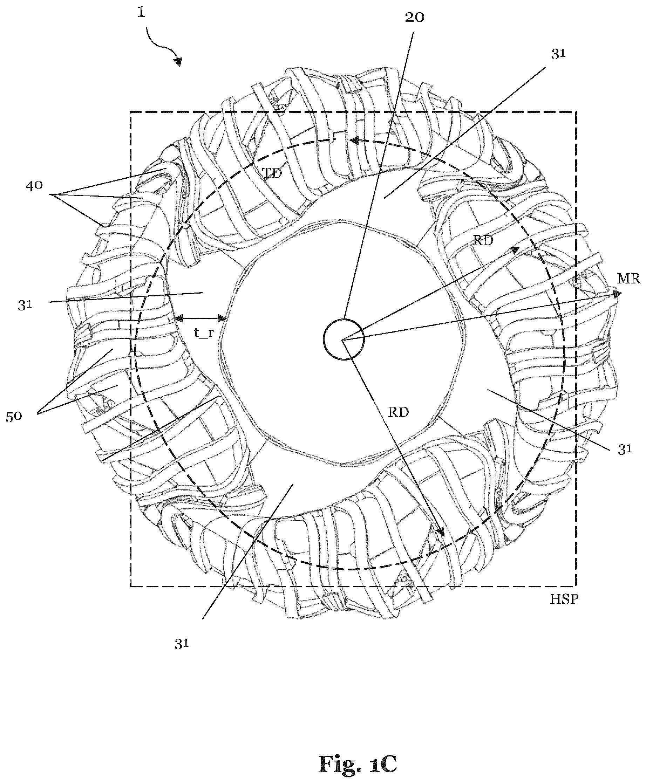

CN 114580217 A regards a limiter for quasi-circular symmetric stellarator and its design method. The limiter has a plasma-facing surface that limits the plasma. Figures 1 to 3 show schematic structural diagram of the limiter. Fig. 5 shows a schematic diagram of a quasi-circular symmetric stellarator with a coil system 500, a vacuum system 600 and supporting system 700, including ring-like structures. The supporting system is arranged above and below the plasma vessel, not arranged between a center of the stellarator and the plasma vessel. The ring-like structures have a fixed thickness along a circumference of the stellarator.

One common issue for conventional stellarators is a deformation and motion of magnetic coils or segments of them due to forces exerted by the magnetic fields on the magnetic coils. Such deformation or motion can lead to misalignment of the magnetic field, adversely affecting plasma confinement and overall device performance. Traditional approaches to address these issues include the use of rigid support structures and reinforcement elements, resulting in increased complexity and weight of the device, making modularity of the stellarator more challenging. Conventional support structures can thus lead to interference with magnetic fields and make maintenance and inspection more difficult and costly. Additionally, the distribution of forces within the stellarator is not always uniform, leading to localized stress points that can compromise the structural stability over time.

Despite advances in the field of stellarator design and plasma confinement, there remains a need for mitigating negative effects on plasma confinement and structural integrity of stellarators caused by the strong forces exerted by the plasma confinement fields on superconducting magnetic coils in a cost-efficient and reliable manner.

Further, there remains a need to provide computer-implemented methods that assist in generating means to address the afore-mentioned needs.

Against this background, an object of the present disclosure is to provide a stellarator that at least partially overcomes the disadvantages of conventional systems. Additionally, it is an object to provide computer-implemented methods that assist in generating at least a part of a respective stellarator.

### SUMMARY

These and other objects, which become apparent from the following description, are addressed by the subject-matter of the independent claims. Preferred embodiments are subject of the dependent claims, and the skilled person finds hints for other suitable embodiments of the present disclosure throughout the disclosure of the present application.

A first aspect of the present disclosure relates to a stellarator comprising: a plurality of non-planar, superconducting coils for generating a magnetic field for confining a plasma inside a plasma vessel, and a coil support structure comprising a first structural arrangement arranged between a center of the stellarator and the plasma vessel and configured to balance a radial force exerted by the magnetic field on the plurality of coils, and a second structural arrangement configured to balance local forces exerted by the magnetic field on one or more coil segments of the plurality of coils, wherein the local forces cause a motion and/or deformation of the one or more segments of the plurality of coils in at least a toroidal direction of the stellarator.

In some stellarator designs and coil support structure configurations the first structural arrangement or the second structural arrangement may not be a part of the coil support structure. Further, as mentioned above, the superconducting coils may be implemented by high-temperature superconductors, such as 2^{nd} generation HTS tape conductors, such as ReBCO-tape conductors.

The first structural arrangement may be configured to balance the radial forces exerted by the magnetic field on the coils, which may help in mitigating the stress and potential deformation caused by these forces. The second structural arrangement may be included to balance local forces acting on individual coil segments. These local forces, which may cause motion and/or deformation in the toroidal direction, are counteracted by this second arrangement, thereby maintaining the integrity and precise positioning of each coil segment. The dual structural arrangements address the challenge of force distribution within the stellarator, ensuring that both global and local forces caused by the strong magnetic field attainable by superconducting coils are effectively managed. This design may provide a more accurate and stable magnetic field configuration, which is essential for optimal plasma confinement. By addressing these specific challenges, the stellarator's design may enhance overall performance, reduce the likelihood of mechanical failure, and extend the operational lifespan of the device.

The motion and/or deformation may include a relative motion and/or relative deformation of one or more coil segments of a first coil with respect to one or more coil segments of a second coil of the stellarator.

The shapes of the plurality of non-planar, superconducting coils may be designed to generate a strong magnetic field for plasma confinement in a stable magnetic configuration necessary for maintaining the plasma within the stellarator. Further, the plasma vessel serves as the containment unit for the plasma, ensuring that the plasma remains isolated within a controlled environment.

The coil support structure may include a first structural arrangement that is strategically positioned between the center of the stellarator and the plasma vessel. This arrangement may be designed to counterbalance the radial forces exerted by the magnetic field on the plurality of coils, thereby maintaining the structural integrity and positional stability of the coils within the stellarator.

Additionally, the coil support structure may comprise a second structural arrangement designed to counteract local forces exerted by the magnetic field on individual coil segments. This arrangement ensures that any motion or deformation caused by these local forces, particularly in the toroidal direction of the stellarator, is effectively managed, preventing structural damage and ensuring the consistent performance of the magnetic confinement system.

As understood by the skilled person, a toroidal direction may be the direction that runs along the larger circular path around the central void of the torus. In a non-limiting example, the toroidal direction may be somewhat similar to a circle following the main circular path of the torus.

In some embodiments of the present disclosure, the first structural arrangement may comprise one or more support rings, preferably at least two and at most five support rings, that may be arranged along a circumference of the plasma vessel in the inner void of the stellarator (e.g., see Figs. 1A to 1C). Such support rings may serve as the primary mechanism for balancing the radial force exerted by the magnetic field on the plurality of non-planar coils. The support rings are positioned between the center of the stellarator and the plasma vessel. By incorporating support rings, the first structural arrangement can effectively distribute the radial forces, thereby enhancing the structural integrity and stability of the stellarator.

A support ring as used in the present disclosure may describe a support structure which extends along a toroidal angle along a circumference of the stellarator. A support ring may for instance extend along the entire circumference in a closed ring, i.e., 360°. However, the support ring is not limited to this example. In other examples, a support ring may comprise a plurality of segments, which extend along the circumference, e.g., one after the other. The support ring may thus be comprised of segments, which may preferably be connected. The segments may form an entire ring. In other examples, the support ring may comprise segments that are spaced apart in the toroidal direction along the circumference of the stellarator. The spaces formed between segments may vary. The spaces formed between segments may not be covered by segments. The segments in conjunction may act as a support ring as used herein.

According to a further embodiment, the stellarator's coil support structure may be enhanced by incorporating one or more support rings that comprise a plurality of segments.

This segmentation allows for improved flexibility and modularity in the design, assembly, and maintenance of the stellarator.

The plurality of segments may comprise at least two and at most 20 segments, providing a range that balances structural integrity with ease of assembly and maintenance.

The segments may be configured to be releasably coupled to one another, which facilitates the assembly process and allows for easier replacement or repair of individual segments without necessitating the disassembly of the entire support ring. This modular approach enhances the maintainability and adaptability of the stellarator.

Furthermore, the stellarator may comprise a same number of corresponding modules, ensuring that the modular design is consistent throughout the structure, which simplifies the overall design and manufacturing process.

Furthermore, one or more of the support rings may comprise a plurality of separate segments that are not connected to each other. This configuration allows for independent movement and adjustment of each segment, which can be beneficial for fine-tuning the magnetic field and plasma confinement.

Additionally, one or more of the separate segments may extend along a toroidal angle of the stellarator between 10° and 120°, providing a specific range of angular coverage that can be optimized for the stellarator's operational requirements e.g., to reduce weight and material costs.

This range allows for precise control over the magnetic field distribution and the mechanical stresses experienced by the coil support structure. By incorporating these features, the stellarator's design becomes more adaptable and resilient, capable of accommodating various operational conditions and maintenance needs.

Segmented support rings and their releasable coupling mechanism enhance the modularity and maintainability of the stellarator, while the specific toroidal angle range for the separate segments allows for precise control and optimization of the magnetic field and plasma confinement. These improvements collectively contribute to a more efficient, flexible, and maintainable stellarator design, capable of meeting the demanding requirements of plasma confinement and magnetic field generation.

According to a further embodiment, the stellarator may comprise one or more support rings that are distributed within a height range of 20% to 80% of the total height dimension of the stellarator.

This specific distribution of support rings ensures that the structural integrity of the stellarator is maintained across a significant portion of its height, thereby providing a more uniform support to the non-planar coils. The support rings act as intermediary structures that facilitate the transfer of mechanical loads and stresses between the coil support structure and the plasma vessel. By being positioned within this specified height range, the support rings can effectively mitigate the radial and local forces exerted by the magnetic field on the plurality of coils, enhancing the overall stability and performance of the stellarator. Furthermore, the distribution of the support rings within this height range ensures that the mechanical stresses are evenly distributed, reducing the likelihood of localized deformations or failures in the structure.

Additionally or alternatively, the support rings may be arranged in an essentially symmetric manner with respect to a horizontal symmetry plane of the stellarator, which is perpendicular to a height direction of the stellarator.

This symmetric arrangement further contributes to the structural balance and stability of the stellarator by ensuring that the forces exerted by the magnetic field are evenly distributed across the structure.

The symmetric placement of the support rings minimizes asymmetric deformations and motions of the coil segments, thereby preserving the precise geometric configuration required for optimal plasma confinement. This symmetry also simplifies the design and manufacturing processes, as it allows for a more predictable and uniform distribution of mechanical loads.

The combination of these features-distribution within a height range of 20% to 80% and symmetric arrangement with respect to the horizontal symmetry plane-enhances the robustness and reliability of the stellarator, ensuring that it can maintain its structural integrity and operational efficiency under the demanding conditions of plasma confinement.

The second structural arrangement may comprise a plurality of coil casings for the plurality of coils.

These may provide for housing and/or protecting each individual coil within the stellarator. This feature enhances the structural integrity and durability of the coils by, e.g., shielding them.

Preferably, there is one coil casing for each coil, ensuring that each coil is individually encased, which allows for more precise control and maintenance of each coil's operational parameters. This individualized casing approach may facilitate easier identification, replacement, and repair of specific coils without necessitating the disassembly of the entire coil system, thereby improving the overall maintenance efficiency of the stellarator.

One or more of the plurality of coil casings may be coupled, preferably releasably, to the first structural arrangement, which is designed to balance the radial force exerted by the magnetic field on the plurality of coils. This coupling mechanism ensures that the structural support provided by the first structural arrangement is effectively transferred to the coil casings, thereby stabilizing the coils against the radial forces and maintaining their optimal positioning within the stellarator.

The releasable coupling allows for the coil casings to be easily detached and reattached as needed, facilitating quick and efficient modifications, upgrades, or replacements of the coils or their casings. This feature is particularly beneficial in scenarios where rapid response to coil failures or adjustments is required, minimizing downtime and enhancing the operational reliability of the stellarator. The combination of these features-individual coil casings, coupling to the first structural arrangement, and the option for releasable coupling-collectively contribute to a robust and adaptable structural framework that supports the stellarator's complex magnetic confinement system. This integrated approach not only enhances the mechanical stability and longevity of the coils but also provides a practical solution for maintenance and operational flexibility, thereby optimizing the performance and efficiency of the stellarator in confining plasma for sustained fusion reactions.

According to a further embodiment, one or more of the plurality of coil casings may be coupled to the one or more support rings via attachment elements, preferably attachment gussets, extending, essentially parallel to a height direction of the stellarator, from an upper portion and/or from a lower portion of the one or more support rings.

The attachment elements, particularly the attachment gussets, may serve as structural connectors that ensure a secure and stable coupling between the coil casings and the support rings. By extending in the height direction of the stellarator, these attachment elements provide vertical support and alignment, which is helpful for maintaining the structural integrity of the stellarator under the influence of magnetic forces.

The upper and lower portions of the support rings offer multiple points of attachment, thereby distributing the mechanical load more evenly and reducing the risk of localized stress concentrations that could lead to structural failure.

The introduction of attachment gussets as attachment elements enhances the robustness of the connection by providing additional surface area for load transfer and by potentially incorporating features such as gusset plates that can further reinforce the joint. Further they are lightweight attachment elements, yet providing sufficient stability and/or reinforcement.

This embodiment also contributes to the overall stability of the stellarator by mitigating the effects of motion and deformation of the coil segments in the toroidal direction, as specified in the independent claim. The attachment elements ensure that the coil casings remain securely fastened to the support rings, thereby preventing undesirable movements that could disrupt the magnetic field configuration and plasma confinement. Moreover, the use of attachment gussets can simplify the assembly and maintenance processes by providing standardized and easily accessible points of attachment.

According to a further embodiment, at least some of the plurality of coil casings may be formed such that they abut to each other in a region between the center of the stellarator and the plasma vessel to balance local forces between segments of neighboring coils.

This embodiment has the advantage that at least some of the coil casings are designed to be in direct contact with each other in a designated region, thereby enhancing the mechanical stability and integrity of the stellarator. The abutment of coil casings allows for the direct transfer and distribution of forces between adjacent coils. This direct contact ensures that local forces are effectively balanced and thereby mitigated.

By having the coil casings abutting each other, the structure can counteract any motion or deformation of the coil segments in the toroidal direction, thereby maintaining the desired configuration and alignment of the coils.

This feature enhances the structural rigidity of the coil support system, ensuring that the coils remain in their intended positions despite the dynamic forces exerted by the magnetic field. This is helpful for maintaining the precision of the magnetic field required for effective plasma confinement.

According to a further embodiment, the second structural arrangement may comprise a plurality of structure elements arranged at least partially between neighboring coil casings.

This specific configuration may facilitate a substantially direct mechanical linkage between adjacent coil segments, thereby enhancing the overall structural integrity of the coil assembly. The inclusion of these structure elements serves to balance local forces exerted by the magnetic field on the coil segments, which is useful for maintaining the precise alignment and shape of the coils.

This balancing act is helpful to counteract the motion and/or deformation of the coil segments in at least a toroidal direction. The structure elements effectively distribute the local forces across the neighboring coils, ensuring that the mechanical stresses do not concentrate in a single area, which could otherwise lead to structural failure or deformation.

Furthermore, the plurality of structure elements may comprise 10 to 300 of them. This range provides a balance between structural support and material efficiency, ensuring that there are enough elements to adequately support and stabilize the coil segments without unnecessarily increasing the mass and complexity of the stellarator.

As understood by the skilled person, the precise number of structure elements can be optimized based on the specific design and operational parameters of the stellarator, such as the strength of the magnetic field, the size and shape of the coils, and the mechanical properties of the materials used.

According to a further embodiment, one or more of the structure elements may comprise a plate shape, a beam shape, or a truss shape.

These shapes have the advantage of providing the necessary mechanical stability and rigidity to counteract the forces exerted by the magnetic field on the non-planar coils.

The plate shape preferably has at least eight corners and/or at most twenty corners. The plate shape preferably comprises convex and/or concave outer faces.

This may improve the distribution of stress and strain across the element, thereby enhancing its ability to withstand deformation and maintain structural integrity under operational conditions. The inclusion of convex or concave outer faces can also facilitate better integration with adjacent components, allowing for a more seamless assembly and potentially reducing points of mechanical failure.

The plate shape may have any possible shape including but not limited to one or more of the following: non-circular, a rhomboid, a parallelogram, a trapezoid, polygonal, a polygonal approximation of a circular shape, a polygonal approximation of an elliptical shape, an equiangular polygon, an equilateral polygon, a regular polygon, a convex polygon.

Additionally or alternatively, the structure elements are specified to have a maximum thickness, preferably in the height direction, ranging from at least 50 mm to at most 1500 mm. In some examples, the maximum thickness may be at least 50 mm. In some examples, the maximum thickness may be at most 1500 mm.

This range ensures that the elements are robust enough to handle the substantial forces involved while still being feasible to manufacture and assemble within the spatial constraints of the stellarator. The specified thickness range also allows for a balance between material strength and weight, optimizing the overall performance and efficiency of the coil support structure.

According to a further embodiment, the second structural arrangement of the stellarator may comprises one or more openings between a subset of neighboring structure elements (cf. Fig. 1C).

This may allow for the passage of objects such as pipes or other relevant entities through the openings. By strategically placing these openings between neighboring structure elements, the design may also ensure that the local forces, which cause motion and/or deformation of the coil segments in at least a toroidal direction of the stellarator, are effectively managed.

Optionally, the total area of the openings may be between 10% and 50% of a total surface area of an envelope surface defined by an outer surface of the structure elements.

This provides a quantitative measure for the extent of the openings, ensuring that they are sufficiently large to perform their intended function without compromising the structural integrity of the second structural arrangement. By specifying a range for the total area of the openings, the design maintains a balance between allowing necessary communication through the openings and preserving the strength and stability of the structure elements. This range ensures that the openings are neither too small to be ineffective nor too large to weaken the support structure.

According to a further embodiment, at least some of the structure elements of the coil support structure in the stellarator may be configured to be releasably coupled to one or more neighboring structure elements.

This releasable coupling mechanism facilitates maintenance and repair operations, allowing for the replacement or adjustment of individual structure elements without necessitating the disassembly of the entire coil support structure. The ability to releasably couple structure elements also enhances the modularity of the stellarator design, enabling customization and scalability of the coil support structure to accommodate different operational requirements or upgrades.

Furthermore, this feature improves the overall flexibility of the stellarator, as it allows for easier access to the internal components, such as the non-planar coils and the plasma vessel, thereby simplifying the process of inspecting and servicing these critical elements.

According to a further embodiment, the thickness of at least one of the one or more support rings in a height direction and/or in a radial direction of the stellarator may vary along a circumference of the stellarator in the toroidal direction of the stellarator.

The varying thickness of the support rings allows for a more tailored response to the localized forces exerted by the magnetic field on the coil segments. By adjusting the thickness in specific regions, the support rings can provide enhanced stability and support where the forces are greatest, thereby mitigating potential deformations and motions of the coil segments in the toroidal direction. This variation in thickness can be achieved through precise engineering and manufacturing techniques, ensuring that the support rings are robust enough to handle the dynamic stresses encountered during stellarator operation.

The communication between the components, specifically the support rings and the coil segments, is facilitated by this adaptive thickness feature, which ensures that the support rings can effectively counteract the forces acting on the coils. This results in a more stable and efficient magnetic confinement system, which is helpful for maintaining the integrity of the plasma vessel and the overall performance of the stellarator. Varying thickness in the support rings may improve mechanical resilience, may reduce the risk of structural failure, and may enhance ability to maintain the desired magnetic field configuration.

By addressing the localized forces more effectively, this feature contributes to the overall longevity and reliability of the stellarator, making it a more viable option for sustained plasma confinement and fusion research.

According to a further embodiment, the thickness in the height direction may vary between 100 mm and 1500 mm along the circumference of the stellarator, allowing for a tailored distribution of material that can better withstand the stresses and forces exerted during operation. In one example, the thickness may be at least 100 mm. In one example, the thickness may be at most 1500 mm. This variation in thickness ensures that the structural integrity of the stellarator is maintained, even under the intense conditions of plasma confinement.

Additionally or alternatively, the thickness in the radial direction may vary between 100 mm and 6000 mm, providing additional support and rigidity to the coil support structure. This radial thickness variation is helpful for balancing the radial forces exerted by the magnetic field on the plurality of non-planar coils, thereby preventing any potential deformation or displacement of the coils.

Additionally or alternatively, the ratio of the thickness in the radial direction to the thickness in the height direction may vary between 1 and 60 along the circumference of the stellarator. This ratio ensures an optimal balance between the radial and height dimensions, contributing to the overall mechanical stability and efficiency of the stellarator. Additionally or alternatively, the ratio of the thickness in the radial direction to a maximal radius of the stellarator varies between 0.5% and 50%. In some examples, the ratio may be at least 0.5%. In some examples, the ratio may be at most 50%.

This facilitates maintaining the structural coherence of the stellarator while accommodating the spatial constraints and design requirements. This ratio helps in distributing the material in a manner that maximizes the strength and durability of the stellarator without compromising its functional capabilities.

Additionally or alternatively, the ratio of the thickness in the height direction to a maximal height of the stellarator may vary between 0.5% and 50%. In some examples, the ratio may be at least 0.5%. In some examples, the ratio may be at most 50%.

This may ensure that the height dimension is proportionally balanced with the overall size of the stellarator. This proportionality may ensure that the structural integrity and operational efficiency of the stellarator may be maintained. Collectively, these variations and ratios in thickness provide a robust framework for the stellarator, enhancing its ability to confine plasma effectively while maintaining structural stability under the influence of magnetic fields.

According to a further embodiment, the stellarator may be formed by a plurality of interconnected modules to introduce a modular design that may facilitate assembly, maintenance, and potential upgrades of the stellarator system.

Preferably, the plurality of interconnected modules may be individually removable from the stellarator. This improves ease of maintenance and repair, as individual modules can be detached and/or serviced and/or replaced without necessitating the disassembly of the entire stellarator.

Each module may comprise a respective subset of the coils, a respective segment of the plasma vessel, and/or a respective segment of the coil support structure.

This may ensure that the magnetic field generation is distributed among the modules, which can lead to improved magnetic field control and stability.

Each module may comprise a respective segment of the plasma vessel may mean that the plasma vessel is also modularized. This may facilitate localized maintenance and inspection of the plasma vessel segments, which can aid in ensuring the integrity and performance of the plasma confinement.

Each module may comprise a respective segment of the coil support structure may mean that the structural integrity and/or force balancing mechanisms may also be modularized. This allows for targeted structural adjustments and reinforcements, which can be particularly beneficial in managing forces exerted by the magnetic fields on the coils.

According to a further embodiment, each module may be formed essentially symmetric with respect to a horizontal symmetry plane of the stellarator arranged perpendicular to a height direction of the stellarator. Optionally each module of the stellarator is also formed essentially symmetric with respect to a respective second symmetry plane that is essentially parallel to the height direction and essentially perpendicular to the horizontal symmetry plane.

This symmetry may ensure that the distribution of forces and the structural integrity of the stellarator are uniformly managed across the horizontal plane, thereby enhancing the stability and efficiency of the magnetic field generated by the coils for plasma confinement. The horizontal symmetry plane may serve as a reference for the spatial arrangement of the modules, facilitating easier assembly and maintenance.

The dual-plane symmetry of this embodiment may improve the structural arrangement by ensuring that forces exerted by the magnetic field on one or more coil segments are balanced not only radially but also in a manner that mitigates motion and deformation, e.g., in the toroidal direction. The second symmetry plane provides an additional axis of uniformity, which contributes to the overall mechanical equilibrium and robustness of the coil support structure.

According to a further embodiment, each module of a subset of the interconnected modules may comprise a respective segment of the coil support structure that exhibits essentially the same symmetry as the corresponding interconnected module of the stellarator. Additionally or alternatively, each interconnected module of a subset of the interconnected modules may comprise a respective segment of the coil support structure, which includes one or more groups of essentially identical structure elements.

This may ensure that the structural integrity and performance of the coil support structure are maintained consistently across different modules, thereby enhancing the overall stability and efficiency of the stellarator. The symmetry in the structural arrangement allows for a more uniform distribution of forces and stresses, which helps maintaining the magnetic field required for plasma confinement. Furthermore, the symmetry may simplify the design and manufacturing processes, as identical and/or similar components can be used across different modules. This may reduce complexity and/or potential points of failure.

This embodiment may enhance the modular approach to the construction of the stellarator, where each segment is composed of groups of identical structure elements. The use of identical structure elements within each segment facilitates easier assembly, maintenance, and potential future upgrades or replacements. It also ensures that the mechanical properties and behavior of the coil support structure are predictable and consistent, further contributing to the reliability and performance of the stellarator. The identical structure elements within each segment can be designed to specifically address the local forces exerted by the magnetic field on the coil segments, thereby enhancing the ability of the coil support structure to balance these forces and prevent unwanted motion or deformation.

For the purposes of this disclosure, the term "*essentially identical*" is to be understood such that essentially identical elements are identical up to typical manufacturing, design, and / or measurement tolerances. The same applies to terms such as *essentially symmetric,* etc.

According to a further embodiment, the coil support structure may comprise an upper support ring, a middle support ring, and a lower support ring, preferably arranged essentially symmetrically with respect to a horizontal symmetry plane of the stellarator perpendicular to a height direction of the stellarator, wherein the upper and the lower support ring may be formed by interconnected segments.

These support rings serve as integral components in maintaining the structural integrity and stability of the stellarator by providing a robust framework for the non-planar coils.

This symmetrical arrangement may facilitate balanced distribution of forces and may enhance overall mechanical stability of the stellarator. Thereby, the likelihood of structural deformations may be reduced.

The upper support ring and the lower support may be formed by interconnected segments may allow for modular construction and ease of assembly. This segmented formation facilitates the manufacturing process, enabling the construction of the support rings in manageable sections that can be individually fabricated, transported, and assembled on-site.

The middle support ring may preferably be arranged in a center between the upper and lower support ring seen in the height direction. However, the present disclosure is not limited to this example. The central support ring should merely be between the upper and lower support ring.

According to a further embodiment, the first structural arrangement of the stellarator may comprise at least one recess, preferably at least one through holes.

This may allow to reduce usage material at locations where such material may not be necessary for the purpose of balancing forces. Thereby, the recess can contribute to weight reduction. Further, the recess may improve stress distribution within the structural arrangement, thereby enhancing the mechanical stability and durability of the stellarator. Moreover, this may allow to accommodate other elements or facilitate the passage of elements. The inclusion of at least one recess within the first structural arrangement may enhance the functionality of the stellarator by allowing for the integration of additional components or systems that may be useful for the operation and/or maintenance of the stellarator.

Through holes may in some examples also serve as attachment points for additional components or systems, thereby enhancing the modularity and adaptability of the stellarator. This feature brings the advantage of improved thermal management, as through holes can be used to integrate cooling channels that dissipate heat generated during the operation of the stellarator. Moreover, through holes can contribute to the overall structural integrity by allowing for the distribution of mechanical loads and reducing the risk of localized stress concentrations.

According to a further embodiment, one or more of the coil casings may have an inhomogeneous mass distribution that increases with distance to the plasma vessel allowing for a more tailored response to the varying magnetic forces encountered at different radial positions within the stellarator.

This embodiment also aids in maintaining alignment of the non-planar coils. Furthermore, the increased mass in the inner section acts as a counterbalance to the local forces that cause motion and/or deformation of the coil segments in the toroidal direction of the stellarator. This counterbalancing effect ensures that the coil segments remain in their intended positions, thereby preserving the integrity of the magnetic field configuration and enhancing the overall performance of the stellarator.

A second aspect of the present disclosure relates to a computer-implemented method for generating topology input data for optimizing a coil support structure of a stellarator, preferably of a stellarator according to any preceding claims, the method comprising: obtaining, based on a predefined magnetic field to be generated by a plurality of non-planar, superconducting coils, geometric data of a plurality of non-planar, superconducting coils and a current, preferably a current for each coil; obtaining, based on the geometric data of the plurality of non-planar, superconducting coils, geometric data of an element encompassing the plurality of non-planar, superconducting coils; calculating, based on the geometric data of the plurality of non-planar, superconducting coils and the current, preferably the current for each coil, a magnetic field; determining, based on the obtained geometric data of the plurality of non-planar, superconducting coils and the calculated magnetic field and the current, preferably the current for each coil, a radial force exerted by the magnetic field on the geometric data of the element; determining, based on the obtained geometric data of the plurality of non-planar, superconducting coils and the calculated magnetic field and the current, preferably the current for each coil, local forces exerted by the magnetic field on the geometric data of the element; processing the geometric data of the plurality of non-planar, superconducting coils, the geometric data of the element encompassing the plurality of non-planar, superconducting coils, the radial force and the local forces to provide the topology input data.

The method begins by obtaining geometric data of the non-planar, superconducting coils and a current, preferably a current for each of the plurality of coils, based on a predefined magnetic field that these coils are designed to generate. This initial step may ensure that the geometric configuration of the coils may be accurately captured, which is helpful for subsequent calculations. Further, preferably, each single coil may have a different coil, which is reflected in that the coils for each of the plurality of coils may be different.

Next, the method involves obtaining geometric data of an element that encompasses, e.g., that surrounds, encloses the plurality of non-planar, superconducting coils. This element may in some examples be a cylinder.

The method then calculates a magnetic field based on the geometric data of the coils and an electric current (e.g., the one that was obtained), which may facilitate determining the magnetic forces. By determining the radial force exerted by the magnetic field on the element, the method addresses the challenge of understanding how the magnetic field influences the structural integrity of the support structure at the level when designing the same on a computer. Additionally, local forces exerted by the magnetic field on the element are determined, providing a force distribution profile. This step may be helpful for identifying potential points of mechanical stress at a later stage, e.g., as described with respect to the method of the third aspect described in here.

The geometric data of the coils, the element, the radial force, and the local forces are then processed to generate the topology input data. This comprehensive data processing may yield an improved, e.g., a more accurate and optimized design for the coil support structure. Thereby, challenges related to mechanical stability and magnetic field precision may be addressed. By capturing and processing geometric and force data, the resulting topology input data is enriched with physical information which may help in finding an optimized support structure.

Obtaining geometric data of a plurality of non-planar, superconducting coils based on a predefined magnetic field to be generated by these coils may comprise inputting data of parameters of a desired magnetic field into a computational model that may simulate the physical configuration of the superconducting coils, thereby generating the necessary geometric data.

Obtaining geometric data of an element encompassing the plurality of non-planar, superconducting coils based on the previously obtained geometric data of the coils may involve the integration of the coil geometric data into a larger model that includes the element, ensuring that the spatial relationships and physical boundaries are accurately represented.

Calculating a magnetic field based on the geometric data of the plurality of non-planar, superconducting coils and an electric current (e.g., the one that was obtained) may make use of electromagnetic simulation means that takes the coil geometry and a current as inputs to solve a mathematic model including but not limited to Maxwell's equations, yielding the resultant magnetic field.

Determining a radial force exerted by the calculated magnetic field on the geometric data of the element may involve applying the principles of magnetostatics to the obtained geometric data and the calculated magnetic field, using computational methods to derive a radial force distribution on the element.

Determining local forces exerted by the magnetic field on the geometric data of the element, based on the same obtained geometric data and calculated magnetic field may require an analysis of the magnetic field's interaction with the element's geometry. The determination of forces may involve using finite element analysis.

Processing the geometric data of the plurality of non-planar, superconducting coils, the geometric data of the element encompassing these coils, the radial force, and the local forces to provide the topology input data may integrate all previously obtained and calculated data into a cohesive dataset that serves as the input for optimizing the coil support structure, typically involving data synthesis and validation techniques to ensure accuracy and consistency.

According to an embodiment, obtaining geometric data of a plurality of non-planar, superconducting coils comprises obtaining, for each coil, coil center points arranged along a poloidal circumference of the stellarator, and obtaining a distance between coil center points of neighboring coils.

The coil center points may serve as reference markers that facilitate the precise mapping of each coil's position relative to the poloidal circumference of the stellarator. This spatial arrangement may be helpful for ensuring that the geometric data accurately reflects the physical configuration of the coils, thereby enhancing the fidelity of the subsequent calculations involving the magnetic field and forces exerted by the magnetic field. By obtaining coil center points, the method may ensure that the geometric data is comprehensive and precise, which may be helpful for the accurate determination of the radial and local forces exerted by the magnetic field on the element.

Furthermore, obtaining a distance between coil center points of neighboring coils adds another layer of specificity to the geometric data acquisition process. This may aid in quantifying the spatial relationships between adjacent coils, which is helpful for the overall configuration and interaction of the coils within the stellarator.

A third aspect of the present disclosure relates to a computer-implemented method for optimizing a coil support structure of a stellarator, preferably of a stellarator as described elsewhere herein, in particular as described with respect to the first aspect, the method comprising: obtaining topology input data of a stellarator, the topology input data comprising geometric data of a plurality of non-planar, superconducting coils, geometric data of an element encompassing the plurality of non-planar, superconducting coils, and a radial force and local forces exerted by a magnetic field on the geometric data of the element; selecting one or more constraints associated with at least the geometric data of the element and the radial force and the local forces; selecting one or more objective functions associated with at least the geometric data of the element and preferably additional information; modifying, based on the obtained topology input data and based on the selected one or more constraints, the geometric data of the element until the selected one or more objective function reaches a first predefined threshold to provide the optimized coil support structure.

The method involves obtaining topology input data that includes geometric data of the superconducting coils, geometric data of an element, and the radial and local forces exerted by the magnetic field on this element. This may ensure that the optimization process takes into account the complex interactions between the coils and the magnetic field.

By selecting one or more constraints related to the geometric data and the forces, the method may address the challenge of ensuring that the coil support structure can withstand the operational stresses without compromising the magnetic confinement properties.

The selection of one or more objective functions associated with the geometric data and optionally additional information allows for a targeted optimization process that may provide a more accurate and efficient coil support structure.

Modifying the geometric data based on the topology input data and the selected constraints until the objective function reaches a predefined threshold may ensure that the optimization may both precise and effective.

Eventually this iterative process may help in extending the operational lifespan of the stellarator by minimizing mechanical stresses and deformations by virtue of the provided optimized coil support structure. Additionally, it may provide a more robust design that can adapt to various operational conditions, thereby enhancing the overall reliability and performance of the stellarator.

The topology input data of a stellarator includes geometric data of a plurality of non-planar, superconducting coils, and geometric data of an element that surrounds these superconducting coils, providing a framework for their arrangement. Furthermore, the topology input data includes information on the radial force and local forces exerted by a magnetic field on the geometric data of the element, which is helpful for understanding the mechanical stresses and interactions within the stellarator structure.

Selecting one or more constraints related to the geometric data of the element and the radial force and local forces may be helpful for guiding the optimization process, ensuring that the modifications to the geometric data of the element adhere to physical and engineering limitations. The constraints may serve as boundary conditions that the optimization algorithm must respect, thereby maintaining the integrity and functionality of the stellarator.

Further, one or more objective functions are chosen. These objective functions are associated with the geometric data of the element and may include additional information. The objective functions define the goals of the optimization process, such as minimizing weight and/or minimizing structural deformation, reducing material stress, and/or enhancing magnetic field stability. By selecting appropriate objective functions, the optimization process can be directed towards achieving specific performance criteria for the coil support structure.

Modifying the geometric data of the element based on the obtained topology input data and the selected constraints may continue iteratively until the selected objective function reaches a first predefined threshold, indicating that the optimization goals have been met. The result is an optimized coil support structure on a computer-level that satisfies the constraints and achieves the desired performance characteristics. Thereby, overall efficiency and stability of the stellarator may be enhanced.

According to an embodiment, one or more constraints comprise one or more of: a maximum stress of the element resulting from the radial force and the local forces exerted on the element, such as a maximum stress of at most 700 MPa, preferably at most 660 MPa, a maximum thickness of the element, such as a maximum thickness of 1000 mm.

The first possible constraint ensures that the element's stress does not exceed a specified limit. This constraint is communicated to the optimization algorithm, which then adjusts the geometric data of the element to ensure that the stress levels remain within the permissible range. This feature brings the benefit of enhancing the structural integrity and reliability of the coil support structure by preventing material failure due to excessive stress.

The second possible constraint imposes a constraint on the maximum thickness of the element. This constraint is similarly communicated to the optimization algorithm, which modifies the geometric data of the element to ensure that its thickness does not exceed the specified maximum. This feature is particularly advantageous in maintaining the compactness and manufacturability of the coil support structure, ensuring that it fits within the spatial constraints of the stellarator design while also potentially reducing material costs.

Optional, the additional information comprises material information and the one or more objective functions comprise a mass of the element.

This additional information is communicated to the optimization algorithm, which then takes into account the material properties and aims to minimize the mass of the element while still satisfying the other constraints. Collectively, these features enhance the robustness, efficiency, and practicality of the optimized coil support structure, ensuring that it meets the stringent requirements of stellarator design while also being cost-effective and manufacturable.

According to a further embodiment, modifying the geometric data of the element comprises various actions such as modifying a volume of the element, which involves altering the spatial dimensions to either increase or decrease the overall volume. Additionally or alternatively, modifying a mass of the element entails adjusting the weight distribution within the element, which can influence the mechanical stability and the magnetic field interactions. Another mechanism involves providing for one or more hollow portions in the element, which can significantly reduce the mass while maintaining structural strength, thereby improving the efficiency of the coil support structure. Furthermore, modifying a mass in a first region of the element and modifying a mass in a second region of the element allows for targeted adjustments in specific areas, enabling fine-tuning of the element's properties to better withstand the forces exerted by the magnetic field. This targeted mass modification can enhance the element's ability to support the non-planar, superconducting coils effectively.

Optionally, the modifying process may include increasing or reducing a respective property of the element, such as its density, stiffness, or thermal conductivity, to achieve the desired optimization. These modifications are based on the obtained topology input data and the selected constraints, ensuring that the changes are aligned with the overall optimization objectives. The geometric data serves as the foundational information that is iteratively adjusted based on the constraints, which define the permissible modifications, and the objective functions, which guide the optimization process towards achieving specific goals.

The new features introduced by these modifications bring a higher degree of customization and precision to the optimization process, allowing for a more efficient and effective design of the coil support structure. By incorporating these detailed modifications, the method may enhance the ability to create a stellarator coil support structure that is both robust and optimized for performance, addressing the complex interplay of forces and geometric considerations inherent in such advanced systems.

According to a further embodiment, obtaining topology input data comprises performing the method as described elsewhere herein, in particular as described in the second aspect.

A fourth aspect of the present disclosure relates to a data processing apparatus comprising means for carrying out the method according to the second aspect and/or the third aspect.

A fifth aspect of the present disclosure relates to a computer program comprising instructions, which when executed by a computer, cause the computer to carry out the method according to the second aspect and/or the third aspect.

A sixth aspect of method for manufacturing a coil support structure of a stellarator, preferably of a stellarator as described elsewhere herein, in particular as described with respect to the first aspect, wherein the method comprises: performing the method of the second aspect to obtain topology input data; performing, based on the obtained topology input data, the method of the third aspect to provide an optimized coil support structure; manufacturing, based on the provided optimized coil support structure, a coil support structure for a stellarator, preferably as described elsewhere herein, in particular as described with respect to the first aspect.

Whether described as method steps, computer program and/or means, the functions described herein may be implemented in hardware, software, firmware, and/or combinations thereof. If implemented in software/firmware, the functions may be stored on or transmitted as one or more instructions or code on a computer-readable medium. Computer-readable media include both computer storage media and communication media including any medium that facilitates transfer of a computer program from one place to another. A storage medium may be any available media that can be accessed by a general purpose or special purpose computer. By way of example, and not limitation, such computer-readable storage media can comprise RAM, ROM, EEPROM, FPGA, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor.

### BRIEF DESCRIPTION OF THE FIGURES

Reference is made to the following figures:
Fig. 1A shows a stellarator according to a possible embodiment of the present disclosure in a perspective view.
Fig. 1B shows aspects of a stellarator according to a further possible embodiment of the present disclosure in a perspective view.
Fig. 1C shows aspects of a stellarator according to a further possible embodiment of the present disclosure in a top view.
Fig. 2A shows aspects of a module of a stellarator according to a possible embodiment of the present disclosure.
Fig. 2B shows aspects of a module of a stellarator according to a possible embodiment of the present disclosure.
Fig. 2C shows aspects of a module of a stellarator according to a possible embodiment of the present disclosure.
Fig. 2D shows aspects of a module of a stellarator according to a possible embodiment of the present disclosure in a side view.
Fig. 3 shows aspects of a coil casing of a coil support structure of a stellarator according to an embodiment of the present disclosure.
Fig. 4 shows aspects of four abutting coil casings of a stellarator according to an embodiment of the present disclosure.
Fig. 5 shows an illustration of local forces acting on segments of a coil as disclosed herein.
Fig. 6 shows an illustration of six steps A, B, C, D, E, F of the computer-implemented method(s) according to a possible embodiment of the present disclosure.
Fig. 7 shows a block diagram of a computer-implemented method for generating topology input data for optimizing a coil support structure of a stellarator according to a possible embodiment of the present disclosure.
Fig. 8 shows a block diagram of a computer-implemented method for optimizing a coil support structure of a stellarator according to a possible embodiment of the present disclosure.

### DETAILED DESCRIPTION

The term "coupled" and variations thereof includes the joining of two members directly or indirectly to one another. Such joining may be stationary (e.g., permanent or fixed) or moveable (e.g., removable or releasable). Such joining may be achieved with the two members coupled directly to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above.

The term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

When dimensions are described herein, manufacturing tolerances usually have to be taken into consideration, which is expressed by the term "substantially". Thus, the dimensions described by such a term may vary slightly. Also in general, i.e., not necessarily limited to dimensions, it is submitted that unless otherwise stated, the term "substantial" or "substantially" as used in the present context may be understood to a great or significant extent or for the most part or essentially.

Furthermore, as used herein, the terms "set", "group", "subset" are intended to include one or more items (e.g., related items, unrelated items, a combination of related and unrelated items, and/or the like), and may be used interchangeably with "one or more". Where only one item is intended, the phrase "only one" or similar language is used.

A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

In the following, a detailed description with reference to the figures is provided.

While specific feature combinations are described in the following with respect to exemplary embodiments of the present disclosure, it is to be understood that not all features of the described aspects have to be present for realizing the technical advantages provided by the present disclosure, which is defined by the subject matter of the claims. The disclosed aspects may be modified by combining certain features of one aspect with one or more features of another aspect. Specifically, the skilled person will understand that features, components and/or functional elements of one aspect can be combined with technically compatible features, components and/or functional elements of any other aspect of the present disclosure given that the resulting combination falls within the definition of the present disclosure. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

**Fig. 1A****,** **Fig. 1B****,** and **Fig. 1C** show various aspects of possible implementations of a stellarator as disclosed herein.

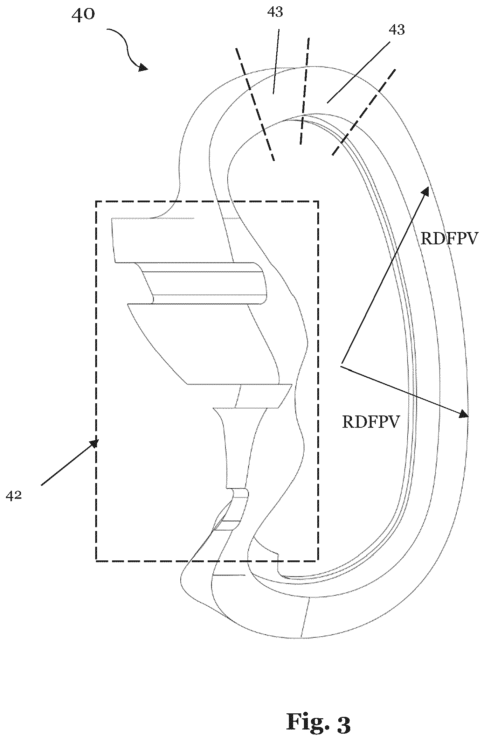

As shown, the exemplary stellarator 1 comprises a plurality of (preferably 10 to 100), non-planar, superconducting coils (not provided with reference numerals), for generating a magnetic field for confining a plasma inside a plasma vessel 10 (not shown but its position is indicated by reference numeral 10 in Fig. 1A), and a coil support structure comprising a first structural arrangement 30 arranged between a center 20 of the stellarator 1 and the plasma vessel 10 and configured to balance a radial force 25 (cf. **Fig. 5**) exerted by the magnetic field on the plurality of coils, and a second structural arrangement (e.g., comprising coil casings 40 and structure elements 40) configured to balance local forces 26 (cf. **Fig. 5**) exerted by the magnetic field on one or more coil segments of the plurality of coils. The local forces cause at least a toroidal motion and/or a toroidal deformation of the one or more segments of the plurality of coils which ideally is fully suppressed by the second structural arrangement. The toroidal direction is indicated by way of TD, and it is understood that the toroidal direction also includes the direction opposite to the one indicated in the figures. The local forces 26 may be balanced by corresponding segments of the second structural arrangement (indicated by reference numeral 43 by way of example in **Fig. 3**).

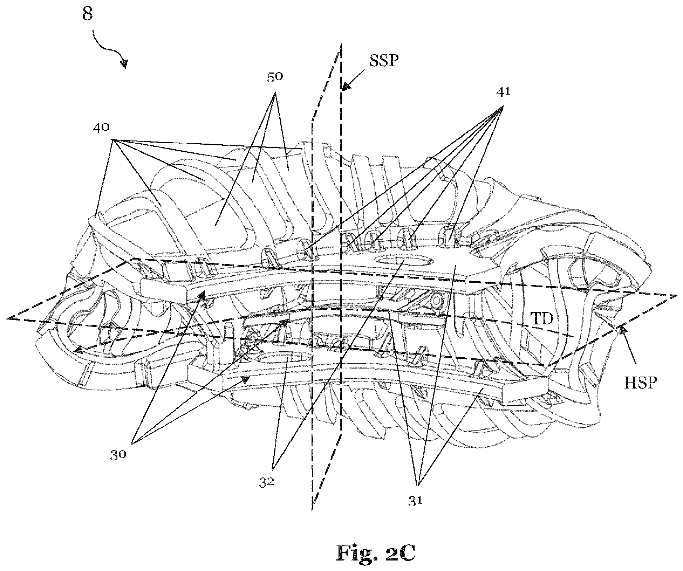

The first structural arrangement 30 may comprise one or more, preferably at least two and/or at most five, support rings 30. In Fig. 1A two rings are shown. Further, the first structural arrangement may comprise at least one recess, preferably at least one of through hole 32 (cf. Fig. 2C).

As shown for the embodiment of Fig. 1C, the support rings 30 may comprise a plurality of segments 31, preferably at least two and at most twenty segments 31, wherein at least some of the segments are configured to be releasably coupled to one another. By way of example, Fig. 1C shows four such segments 31.

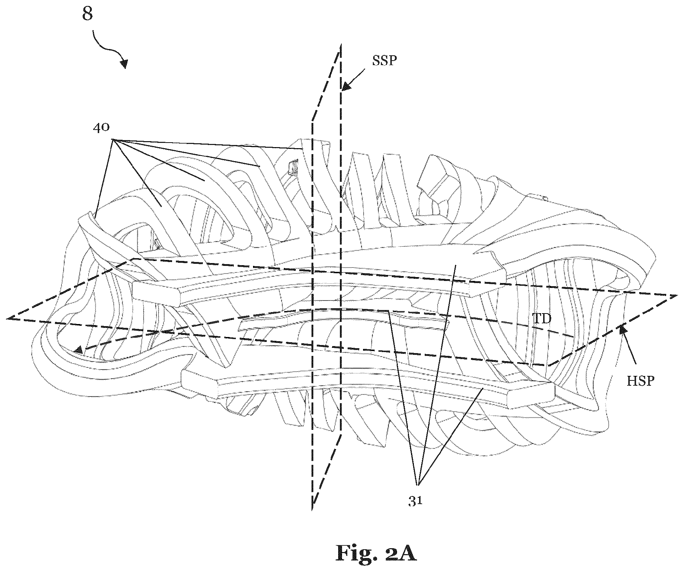

The stellarator may comprise a plurality of stellarator modules 8 (cf. Fig. 2A for a possible implementation of such a module) that corresponds to the number of segments 31.

One or more of the support rings 30 may comprise a plurality of separate segments 31 that are not connected to each other.

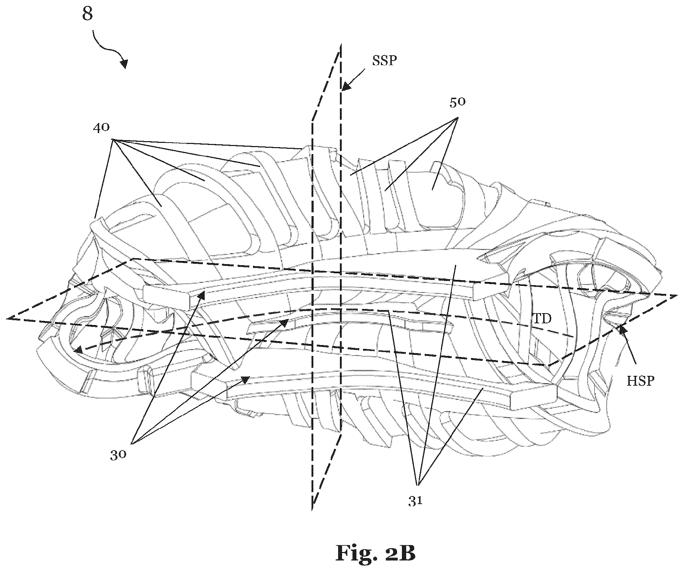

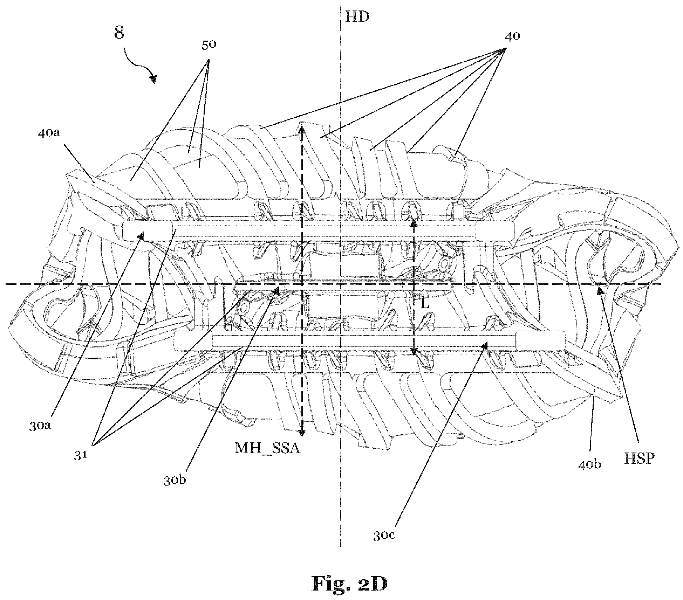

**Fig. 2A****,** **Fig. 2B****,** **Fig. 2C** **and** **Fig. 2D** show aspects of a module 8 of a stellarator according to various embodiments of the present disclosure.

As can be seen, one or more of the segments 31 (including one or more of the separate segments 31) of one or more of the support rings 30 may extend along a toroidal angle (along the toroidal direction TD) of the stellarator 1 between 10° and 120°. For instance, one or more of the segments 31 may extend along a toroidal angle of the stellarator 1 by at least 20°, at least 30°, at least 40°, at least 50°, at least 60°, at least 70°, at least 80°, at least 90°, at least 100°, at least 110°, at least 120°, and/or at most 120°, at most 110°, at most 100°, at most 90°, at most 80°, at most 70°, at most 60°, at most 50°, at most 40°, at most 30°, at most 20°, at most 10°.

The upper and/or the lower segment 31 may extend by substantially a similar toroidal angle (along TD) as the module 8 of the stellarator.

As best seen in Fig. 2D, the one or more support rings 30 may be distributed within a height range (indicated by way of L) of 20% to 80% of a maximal height dimension (indicated as MH_SSA) of the second structural arrangement (e.g., encompassing coil casings 40 and structure elements 50 in some embodiments). The height range L in the example of Fig. 2D may start at about 25% as seen from the lower end of the second structural arrangement in the height direction HD and may end at about 75% as seen from the lower end of the second structural arrangement in the height direction. Hence, the height range may be 50% in this particular example. However, this just serves to explain the height range in greater detail and does not limit the height range to this particular example.

As seen in Fig. 2D, the one or more support rings 30 (although in Fig. 2D segments 31 of the support rings 30 are shown) may be distributed in an essentially symmetric arrangement with respect to a horizontal symmetry plane HSP of the stellarator 1 perpendicular to the height direction HD of the stellarator 1.

As shown inter alia in Fig. 2A, the second structural arrangement may comprise a plurality of coil casings 40 for the plurality of coils, preferably one coil casing 40 for each coil. Further, one or more of the plurality of coil casings 40 may be coupled, preferably releasably coupled, to the first structural arrangement 30.

As seen in Fig. 2C, one or more of the plurality of coil casings 40 may be coupled to the one or more support rings 30 via attachment elements 41, preferably attachment gussets 41, extending essentially parallel to a height direction HD of the stellarator 1, from an upper portion and / or from a lower portion of the one or more support rings 30. Further, at least some of the plurality of coil casings 40 may be formed such that they abut to each other in a region 42 between the center 20 of the stellarator 1 and the plasma vessel 10 to balance local forces between segments of neighboring coils.

The second structural arrangement may comprise one or more, preferably a plurality of structure elements 50 arranged at least partially between neighboring coil casings 40 and are configured to balance local forces between segments of neighboring coils.

As indicated for instance in Figs. 2B to 2D, one or more of the structure elements 50 may have one or more of following: a plate shape, a beam shape, or a truss shape. Preferably, the plate shape may have eight corners (as shown in the illustrated examples) to twenty corners and/or convex outer faces and/or concave outer faces. Additionally or alternatively, the structure elements 50 have a maximum thickness of at least 50 mm and of at most 1500 mm. In case the structure elements 50 would be substantially planar in a horizontal direction (e.g., parallel to HSP) then the thickness would be the dimension along the height direction.

Additionally or alternatively, the second structural arrangement may comprise one or more openings (visible e.g., in Fig. 1C) between a subset of neighboring structure elements 50. Optionally, a total area of the openings may be between 10% and 50% of a total surface area of an envelope surface defined by an outer surface of the structure elements 50. Additionally or alternatively, at least some of the structure elements 50 may be configured to be releasably coupled to one or more neighboring structure elements 50.

As seen inter alia in Fig. 2A, a thickness of at least one of the one or more support rings 30 in a height direction HD of the stellarator 1 may vary along a circumference of the stellarator 1 in the toroidal direction TD of the stellarator 1. Further, as best seen in Fig. 1C, a thickness t_r of at least one of the one or more support rings 30 in a radial direction RD (as indicated inter alia in Fig. 1C) varies along a circumference of the stellarator 1 in the toroidal direction TD of the stellarator 1.

The thickness in the height direction HD may vary between 100 mm and 1500 mm along the circumference of the stellarator 1 in the toroidal direction TD of the stellarator 1. Additionally or alternatively, the thickness t_r in the radial direction RD may vary between 100 mm and 6000 mm.

Additionally or alternatively, a ratio of the thickness in the radial direction to the thickness in the height direction may vary between 1.0 to 60.0 along the circumference of the stellarator 1.

Additionally or alternatively, a ratio of the thickness t_r in the radial direction RD to a maximal radius MR (exemplarily indicated in Fig. 1C) of the stellarator 1 may vary between 0.5 % to 50%.

Additionally or alternatively, a ratio of the thickness in the height direction HD to a maximal height dimension of the stellarator 1 varies between 0.5 % and 50%.

As already indicated above, the stellarator 1 can be formed by a plurality of interconnected modules 8 (e.g., Fig. 2A shows one module 8), preferably individually removable from the stellarator 1 e.g., to facilitate module replacement for maintenance of the stellarator. Each module 8 may comprise a respective subset of the non-planar, superconducting coils, a respective segment of the plasma vessel, and, optionally a respective segment of the coil support structure.

As best seen in Fig. 2D, each module 8 of the stellarator 1 may be formed essentially symmetric with respect to a horizontal symmetry plane HSP of the stellarator 1 arranged perpendicular to a height direction HD of the stellarator 1. Additionally or alternatively, each module 8 of the stellarator 1 may be formed essentially symmetric with respect to a respective second symmetry plane SSP (as exemplarily indicated in Fig. 2C) essentially parallel to the height direction HD and essentially perpendicular to the horizontal symmetry plane HSP.

As best seen in Fig. 2D, each module 8 (one module 8 is shown in Fig. 2D) of a subset of the interconnected modules 8 may comprise a respective segment of the coil support structure (e.g., comprising support rings 30, coil casings 40 and / or structure elements 50) that can exhibit essentially the same symmetry as the corresponding interconnected module 8 of the stellarator 1. To give an illustrative and non-limiting example, the coil casing 40a on the upper half on the left-hand side and the coil casing 40b on the lower half on the right-hand side in Fig. 2D may be symmetrical with respect to one another. These coil casings therefore exhibit essentially the same symmetry as the corresponding interconnected module 8. In the art, such a symmetry is also called a Stellarator Symmetry (e.g., see R.L. Dewar et al.: Stellarator symmetry, in "Physica D" 112 (1998) 275-280)

Moreover, each interconnected module 8 of a subset of the interconnected modules 8 may comprise a respective segment of the coil support structure, comprising one or more groups of essentially identical structure elements, e.g., due to the symmetry of the module 8 as discussed above.

As shown in Fig. 2D, the coil support structure may comprise an upper support ring 30a, a middle support ring 30b, and a lower support ring 30c, preferably arranged essentially symmetrically with respect to the horizontal symmetry plane HSP of the stellarator 1 perpendicular to a height direction HD of the stellarator 1. The upper 30a and the lower 30c support ring may be formed by interconnected segments.

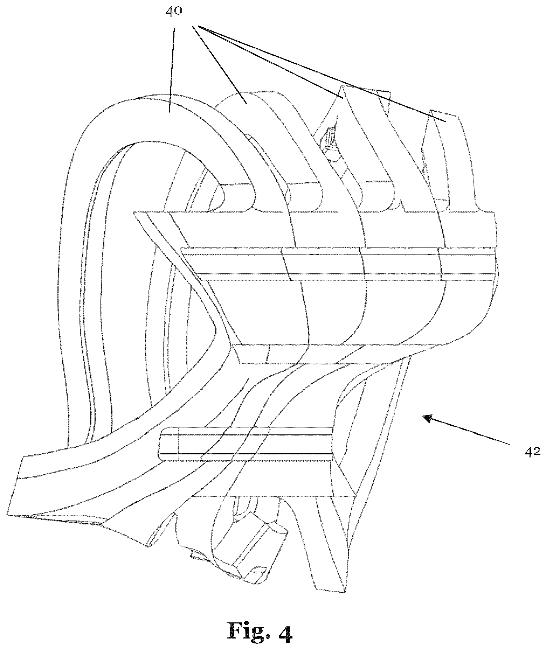

**Fig**. **3** shows a coil casing 40 of a stellarator 1 according to an embodiment of the present disclosure. **Fig. 4** shows four coil casings 40 of a coil support structure stellarator 1 according to an embodiment of the present disclosure. In here, the region of abutment 42 of one or more coil casings 40 is shown in greater detail.

Moreover, as can be seen from Figs. 3 and 4, one or more of the coil casings 40 can have an inhomogeneous mass distribution that increases with distance RDFPV (indicating radial distance from the plasma vessel) to the plasma vessel 10. For instance, the mass may be higher at a radially outer portion of the coil casing 40 in Fig. 3 as compared to a radially inner portion of the coil casing 40.

**Fig. 5** shows exemplary parts of a radial force 25 and local forces 26. The forces are depicted for three exemplary coils (a first coil on the left-hand side, a second coil in the middle, and a third coil on the right-hand side). The coils and thereby the one or more coil segments are not shown. However, the coils may be understood to be located in proximity to the starting points of the circumferentially arranged arrows 26 in Fig. 5. The local forces 26 are exerted by the magnetic field on one or more coil segments. The sum of the local forces 26 of each coil yields a resulting force 25 contributing to the radial force on the coils which is balanced by the first structural arrangement (e.g., by the support ring(s) 30 as described elsewhere herein.

Exemplarily, during operation of the stellarator 1, the local forces per unit length may be at least 2 Mega Newton (MN)/m, preferably at least 5 MN/m, preferably at least 10 MN/m, and/or at most 300 MN/m, preferably at most 200 MN/m, preferably at most 150 MN/m.

Exemplarily, during operation of the stellarator 1, the radial force (i.e., the sum of the parts of radial force 25 shown in Fig. 5) may be at least 50 MN, preferably at least 70 MN, preferably at least 100 MN, and/or at most 1000 MN, preferably at most 900 MN, preferably at most 800 MN, preferably at most 700 MN, preferably at most 600 MN.

**Fig. 6** shows an illustration of six steps A, B, C, D, E, F of the computer-implemented method(s) according to a possible embodiment of the present disclosure.

The computer-implemented method for generating topology input data for optimizing a coil support structure of a stellarator may comprise obtaining, based on a predefined magnetic field to be generated by a plurality of non-planar, superconducting coils, geometric data of a plurality of non-planar, superconducting coils and a current, preferably a current for each coil. In Fig. 6, coil center points are indicated as 40', the respective geometry is indicated as 40 (see e.g. steps A and B in Fig. 6).

The method may also comprise obtaining, based on the geometric data of the plurality of non-planar, superconducting coils 40', 40, geometric data of an element 60 encompassing the plurality of non-planar, superconducting coils 40', 40 (see step D in Fig. 6).

The method may also comprise calculating, based on the geometric data of the plurality of non-planar, superconducting coils and the current, preferably the current for each coil, a magnetic field (which may be situated within the circumference formed by the coils 40 in Fig. 6;

The method may also comprise determining, based on the obtained geometric data of the plurality of non-planar, superconducting coils 40', 40 and the calculated magnetic field and the current, preferably the current for each coil, a radial force exerted by the magnetic field on the geometric data of the element;

The method may also comprise determining, based on the obtained geometric data of the plurality of non-planar, superconducting coils 40', 40 and the calculated magnetic field and the current, preferably the current for each coil, local forces exerted by the magnetic field on the geometric data of the element 60 (exemplary forces are indicated in step C in Fig. 6).

The method may also comprise processing the geometric data of the plurality of non-planar, superconducting coils 40', 40, the geometric data of the element 60 encompassing the plurality of non-planar, superconducting coils 40', 40, the radial force and the local forces to provide the topology input data.

Step E in Fig. 6 shows a step in which the element 60 is meshed, which may be performed using a computer design tool.

The computer-implemented method for optimizing a coil support structure of a stellarator may comprise obtaining topology input data of a stellarator, the topology input data comprising geometric data of a plurality of non-planar, superconducting coils 40', 40, geometric data of an element 60 encompassing the plurality of non-planar, superconducting coils, and a radial force and local forces exerted by a magnetic field on the geometric data of the element 60. The data provided by the preceding method may be used for this.

The method may also comprise selecting one or more constraints associated with at least the geometric data of the element 60 and the radial force and the local forces and selecting one or more objective functions associated with at least the geometric data of the element 60 and preferably additional information (e.g., material information such as a type of a material, density, or the like).

The method may also comprise modifying, based on the obtained topology input data and based on the selected one or more constraints, the geometric data of the element 60 until the selected one or more objective function reaches a first predefined threshold to provide the optimized coil support structure 60' (see e.g. step F in Fig. 6).

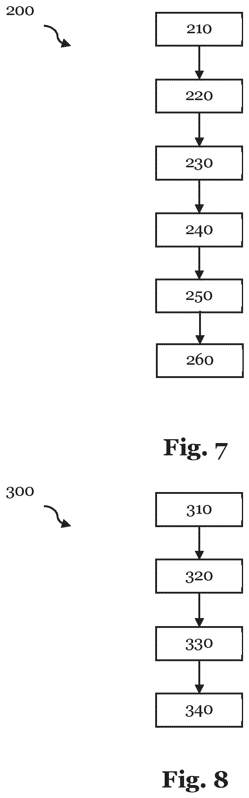

**Fig. 7** shows a block diagram of the computer-implemented method 200 for generating topology input data for optimizing a coil support structure of a stellarator according to a possible embodiment of the present disclosure.

The method comprises obtaining 210, based on a predefined magnetic field to be generated by a plurality of non-planar, superconducting coils, geometric data of a plurality of non-planar, superconducting coils and a current, preferably a current for each coil; obtaining 220, based on the geometric data of the plurality of non-planar, superconducting coils, geometric data of an element encompassing the plurality of non-planar, superconducting coils; calculating 230, based on the geometric data of the plurality of non-planar, superconducting coils and the current, preferably the current for each coil, a magnetic field; determining 240, based on the obtained geometric data of the plurality of non-planar, superconducting coils and the calculated magnetic field and the current, preferably the current for each coil, a radial force exerted by the magnetic field on the geometric data of the element; determining 250, based on the obtained geometric data of the plurality of non-planar, superconducting coils and the calculated magnetic field and the current, preferably the current for each coil, local forces exerted by the magnetic field on the geometric data of the element; and processing 260 the geometric data of the plurality of non-planar, superconducting coils, the geometric data of the element encompassing the plurality of non-planar, superconducting coils, the radial force and the local forces to provide the topology input data.

**Fig**. **8** shows a block diagram of a computer-implemented method 300 for optimizing a coil support structure of a stellarator.

The method comprises obtaining 310 topology input data of a stellarator, the topology input data comprising geometric data of a plurality of non-planar, superconducting coils, geometric data of an element encompassing the plurality of non-planar, superconducting coils, and a radial force and local forces exerted by a magnetic field on the geometric data of the element; selecting 320 one or more constraints associated with at least the geometric data of the element and the radial force and the local forces; selecting 330 one or more objective functions associated with at least the geometric data of the element and preferably additional information; and modifying 340, based on the obtained topology input data and based on the selected one or more constraints, the geometric data of the element until the selected one or more objective function reaches a first predefined threshold to provide the optimized coil support structure.

It is noted that the above examples may be combined with further aspects as described herein and details of the examples may also be omitted, as will be understood by the skilled person. The scope of protection is determined by the claims and is not limited by the embodiments disclosed in the above figures.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of the inventions disclosed herein.

While this disclosure has described certain embodiments and generally associated methods devices and or systems, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the independent and dependent claims.

### FURTHER EMBODIMENTS

The following list provides further embodiments of the present disclosure.
1. A stellarator (1) comprising:
   a plurality of non-planar, superconducting coils, for generating a magnetic field for confining a plasma inside a plasma vessel; and
   a coil support structure (30, 40, 50) comprising:
      a first structural arrangement (30) arranged between a center (20) of the stellarator and the plasma vessel and configured to balance a radial force exerted by the magnetic field on the plurality of coils;
      a second structural arrangement (40, 50) configured to balance local forces exerted by the magnetic field on one or more coil segments of the plurality of coils;
      wherein the local forces cause at least a toroidal motion and/or a toroidal deformation of the one or more segments of the plurality of coils.
2. The stellarator of embodiment 1,
   wherein the first structural arrangement (30) comprises one or more support rings (30); and / or
   wherein the first structural arrangement (30) comprises a at least one recess, preferably at least one through hole (32).
3. The stellarator of embodiment 2,
   wherein one or more of the support rings (30) comprise a plurality of segments (31), preferably at least two and at most 20 segments (31), wherein at least some of the segments are configured to be releasably coupled to one another, and/or
   wherein the stellarator (1) comprises a same number of corresponding modules (8) and/or
   wherein one or more of the support rings comprise a plurality of separate segments (31) that are not connected to each other, and / or
   wherein one or more of the segments extend along a toroidal angle of the stellarator between 10° and 120°.
4. The stellarator of embodiment 2 or 3,
   wherein the one or more support rings (30) are distributed within a height range (L) of 20% to 80% of a maximal height dimension (MH_SSA) of the second structural arrangement (40, 50); and / or
   wherein the one or more support rings are distributed in an essentially symmetric arrangement with respect to a horizontal symmetry plane (HSP) of the stellarator perpendicular to a height direction (HD) of the stellarator.
5. The stellarator of any one of the preceding embodiments 1 to 4,
   wherein the second structural arrangement (40, 50) comprises a plurality of coil casings (40) for the plurality of coils, preferably one coil casing (40) for each coil,
   wherein one or more of the plurality of coil casings (40) are coupled, preferably releasably, to the first structural arrangement (30).
6. The stellarator of embodiment 5,
   wherein one or more of the plurality of coil casings are coupled to the one or more support rings via attachment elements (41), preferably attachment gussets, extending, essentially parallel to a height direction (HD) of the stellarator, from an upper portion and / or from a lower portion of the one or more support rings; and / or
   wherein at least some of the plurality of coil casings (40) are formed such that they abut to each other in a region between the center (20) of the stellarator (1) and the plasma vessel (10) to balance local forces between segments of neighboring coils.
7. The stellarator of any of embodiments 1 to 6,
   wherein the second structural arrangement comprises a plurality of structure elements (50) arranged at least partially between neighboring coil casings (40) and are configured to balance local forces between segments of neighboring coils.
8. The stellarator of embodiment 7,
   wherein one or more of the structure elements (50) have one or more of following: a plate shape, a beam shape, or a truss shape,
   wherein, preferably, the plate shape has eight to twenty corners and/or convex outer faces and/or concave outer faces; and / or
   wherein the structure elements (50) have a maximum thickness of at least 50 mm and of at most 1500 mm; and / or

   wherein the second structural arrangement comprises one or more openings between a subset of neighboring structure elements, wherein, optionally, a total area of the openings is between 10% and 50% of a total surface area of an envelope surface defined by an outer surface of the structure elements; and / or
   wherein at least some of the structure elements are configured to be releasably coupled to one or more neighboring structure elements.
9. The stellarator of any one of embodiments 2 to 8,
   wherein a thickness of at least one of the one or more support rings (30) in a height direction and /or a thickness (t_r) of at least one of the one or more support rings (30) in a radial direction (RD) of the stellarator (1) varies along a circumference of the stellarator in the toroidal direction of the stellarator.
10. The stellarator of embodiment 9,
   wherein the thickness in the height direction varies between 100 mm and 1500 mm along the circumference of the stellarator, and / or
   wherein the thickness (t_r) in the radial direction varies between 100 mm and 6000 mm; and / or
   wherein a ratio of the thickness (t_r) in the radial direction to the thickness in the height direction varies between 1.0 to 60.0 along the circumference of the stellarator; and / or
   wherein a ratio of the thickness (t_r) in the radial direction to a maximal radius of the stellarator varies between 0.5 % to 50%; and / or wherein a ratio of the thickness in the height direction to a maximal height dimension of the stellarator varies between 0.5 % and 50%.
11. The stellarator of any of embodiments 2 to 10,
   wherein the stellarator is formed by a plurality of interconnected modules (8), preferably individually removable from the stellarator, wherein each module comprises a respective subset of the non-planar, superconducting coils, a respective segment of the plasma vessel, and, optionally a respective segment of the coil support structure.
12. The stellarator of embodiment 11,
   wherein each module (8) of the stellarator (1) is formed essentially symmetric with respect to a horizontal symmetry plane (HSP) of the stellarator (1) arranged perpendicular to a height direction (HD) of the stellarator (1); and / or
   wherein each module (8) of the stellarator (1) is formed essentially symmetric with respect to a respective second symmetry plane (SSP) essentially parallel to the height direction (HD) and essentially perpendicular to the horizontal symmetry plane (HSP).
13. The stellarator of embodiment 12,
   wherein each module (8) of a subset of the interconnected modules
      comprises a respective segment of the coil support structure that exhibits essentially the same symmetry as the corresponding interconnected module of the stellarator; and / or
   wherein each interconnected module of a subset of the interconnected modules comprises a respective segment of the coil support structure, comprising one or more groups of essentially identical structure elements.
14. The stellarator of any of embodiments 1 to 13,
   wherein the coil support structure comprises an upper support ring, a middle support ring, and a lower support ring, preferably arranged essentially symmetrically with respect to a horizontal symmetry plane of the stellarator perpendicular to a height direction of the stellarator,
   wherein the upper and the lower support ring are formed by interconnected segments.
15. The stellarator of any of embodiments 5 to 14,
   wherein one or more of the coil casings (40) have an inhomogeneous mass distribution that increases with distance to the plasma vessel.
16. A computer-implemented method for generating topology input data for optimizing a coil support structure of a stellarator, preferably of a stellarator according to any preceding embodiments, the method comprising:
   obtaining, based on a predefined magnetic field to be generated by a plurality of non-planar, superconducting coils, geometric data of a plurality of non-planar, superconducting coils and a current, preferably a current for each coil;
   obtaining, based on the geometric data of the plurality of non-planar, superconducting coils, geometric data of an element encompassing the plurality of non-planar, superconducting coils;
   calculating, based on the geometric data of the plurality of non-planar, superconducting coils and the current, preferably the current for each coil, a magnetic field;
   determining, based on the obtained geometric data of the plurality of non-planar, superconducting coils and the calculated magnetic field and the current, preferably the current for each coil, a radial force exerted by the magnetic field on the geometric data of the element;
   determining, based on the obtained geometric data of the plurality of non-planar, superconducting coils and the calculated magnetic field and the current, preferably the current for each coil, local forces exerted by the magnetic field on the geometric data of the element;
   processing the geometric data of the plurality of non-planar, superconducting coils, the geometric data of the element encompassing the plurality of non-planar, superconducting coils, the radial force and the local forces to provide the topology input data.
17. The computer-implemented method for generating topology input data for optimizing a coil support structure of a stellarator of embodiment 16,
   wherein obtaining geometric data of a plurality of non-planar, superconducting coils comprises obtaining, for each coil, coil center points arranged along a poloidal circumference of the stellarator, and obtaining a distance between coil center points of neighboring coils.
18. A computer-implemented method for optimizing a coil support structure of a stellarator, preferably of a stellarator according to any one of embodiments 1 to 15, the method comprising:
   obtaining topology input data of a stellarator, the topology input data comprising geometric data of a plurality of non-planar, superconducting coils, geometric data of an element encompassing the plurality of non-planar, superconducting coils, and a radial force and local forces exerted by a magnetic field on the geometric data of the element;
   selecting one or more constraints associated with at least the geometric data of the element and the radial force and the local forces;
   selecting one or more objective functions associated with at least the geometric data of the element and preferably additional information;
   modifying, based on the obtained topology input data and based on the selected one or more constraints, the geometric data of the element until the selected one or more objective function reaches a first predefined threshold to provide the optimized coil support structure.
19. The computer-implemented method for optimizing a coil support structure of a stellarator of embodiment 18,
   wherein the one or more constraints comprise one or more of:
   a maximum stress of the element resulting from the radial force and the local forces exerted on the element, such as a maximum stress of at most 900 MPa, preferably at most 800 MPa, preferably at most 700 MPa, preferably at most 660 MPa;
   a maximum thickness of the element, such as a maximum thickness of at most 1500 mm, preferably at most 1250 mm, preferably at most 1000 mm;
   optionally, wherein the additional information comprise material information and the one or more objective functions comprise a mass of the element.
20. The computer-implemented method for optimizing a coil support structure of a stellarator of embodiment 18 or 19, wherein modifying the geometric data of the element comprises one or more of:
   modifying a volume of the element,
   modifying a mass of the element,
   providing for one or more hollow portions in the element,
   modifying a mass in a first region of the element and modifying a mass in a second region of the element,
   optionally wherein modifying comprises increasing or reducing a respective property of the element.
21. The computer-implemented method for optimizing a coil support structure of a stellarator of any one of embodiments 18 to 20, wherein obtaining topology input data comprises performing the method of embodiments 16 or 17.
22. A data processing apparatus comprising means for carrying out the method according to any one of embodiments 16 or 17 and/or the method according to any one of embodiments 18 to 21.
23. A computer program comprising instructions, which when executed by a computer, cause the computer to carry out the method according to any one of embodiments 16 or 17 and/or the method according to any one of embodiments 18 to 21.
24. A method for manufacturing a coil support structure of a stellarator, preferably of a stellarator according to any one of embodiments 1 to 15, wherein the method comprises:
   performing the method of embodiments 16 or 17 to obtain topology input data;
   performing, based on the obtained topology input data, the method of any one of embodiments 18 to 21 to provide an optimized coil support structure;
   manufacturing, based on the provided optimized coil support structure, a coil support structure for a stellarator, preferably of a stellarator according to any one of embodiments 1 to 15.

### FURTHER EMBODIMENTS

The following list provides further embodiments of the present disclosure.
Embodiment 1. A stellarator (1) comprising: a plurality of non-planar, superconducting coils for generating a magnetic field for confining a plasma inside a plasma vessel; and a coil support structure (30, 40, 50) comprising: a first structural arrangement (30) arranged between a center (20) of the stellarator and the plasma vessel and configured to balance a radial force exerted by the magnetic field on the plurality of coils; a second structural arrangement (40, 50) configured to balance local forces exerted by the magnetic field on one or more coil segments of the plurality of coils; wherein the local forces cause at least a toroidal motion and/or a toroidal deformation of the one or more segments of the plurality of coils.
Embodiment 2. The stellarator according to embodiment 1, wherein the first structural arrangement (30) comprises one or more support rings (30); and/or wherein the first structural arrangement (30) comprises at least one recess, preferably at least one through hole (32).
Embodiment 3. The stellarator according to embodiment 2, wherein one or more of the support rings (30) comprise a plurality of segments (31), preferably at least two and at most 20 segments (31), wherein at least some of the segments are configured to be releasably coupled to one another, and/or wherein the stellarator (1) comprises a same number of corresponding modules (8) and/or wherein one or more of the support rings comprise a plurality of separate segments (31) that are not connected to each other, and/or wherein one or more of the segments extend along a toroidal angle of the stellarator between 10° and 120°.
Embodiment 4. The stellarator according to embodiment 2 or 3, wherein the one or more support rings (30) are distributed within a height range (L) of 20% to 80% of a maximal height dimension (MH_SSA) of the second structural arrangement (40, 50); and/or wherein the one or more support rings are distributed in an essentially symmetric arrangement with respect to a horizontal symmetry plane (HSP) of the stellarator perpendicular to a height direction (HD) of the stellarator.
Embodiment 5. The stellarator according to any one of embodiments 1 to 4, wherein the second structural arrangement (40, 50) comprises a plurality of coil casings (40) for the plurality of coils, preferably one coil casing (40) for each coil, wherein one or more of the plurality of coil casings (40) are coupled, preferably releasably, to the first structural arrangement (30), optionally, wherein one or more of the coil casings (40) have an inhomogeneous mass distribution that increases with distance to the plasma vessel.
Embodiment 6. The stellarator according to embodiment 5, wherein one or more of the plurality of coil casings are coupled to the one or more support rings via attachment elements (41), preferably attachment gussets, extending, essentially parallel to a height direction (HD) of the stellarator, from an upper portion and/or from a lower portion of the one or more support rings; and/or wherein at least some of the plurality of coil casings (40) are formed such that they abut to each other in a region between the center (20) of the stellarator (1) and the plasma vessel (10) to balance local forces between segments of neighboring coils.
Embodiment 7. The stellarator according to any of embodiments 1 to 6, wherein the second structural arrangement comprises a plurality of structure elements (50) arranged at least partially between neighboring coil casings (40) and are configured to balance local forces between segments of neighboring coils.
Embodiment 8. The stellarator according to embodiment 7, wherein one or more of the structure elements (50) have one or more of the following: a plate shape, a beam shape, or a truss shape, wherein, preferably, the plate shape has eight to twenty corners and/or convex outer faces and/or concave outer faces; and/or wherein the structure elements (50) have a maximum thickness of at least 50 mm and of at most 1500 mm; and/or wherein the second structural arrangement comprises one or more openings between a subset of neighboring structure elements, wherein, optionally, a total area of the openings is between 10% and 50% of a total surface area of an envelope surface defined by an outer surface of the structure elements; and/or wherein at least some of the structure elements are configured to be releasably coupled to one or more neighboring structure elements.
Embodiment 9. The stellarator according to any one of embodiments 2 to 8, wherein a thickness of at least one of the one or more support rings (30) in a height direction and/or a thickness (t_r) of at least one of the one or more support rings (30) in a radial direction (RD) of the stellarator (1) varies along a circumference of the stellarator in the toroidal direction of the stellarator.
Embodiment 10. The stellarator according to embodiment 9, wherein the thickness in the height direction varies between 100 mm and 1500 mm along the circumference of the stellarator, and/or wherein the thickness (t_r) in the radial direction varies between 100 mm and 6000 mm; and/or wherein a ratio of the thickness (t_r) in the radial direction to the thickness in the height direction varies between 1.0 to 60.0 along the circumference of the stellarator; and/or wherein a ratio of the thickness (t_r) in the radial direction to a maximal radius of the stellarator varies between 0.5% to 50%; and/or wherein a ratio of the thickness in the height direction to a maximal height dimension of the stellarator varies between 0.5% and 50%.
Embodiment 11. The stellarator according to any of embodiments 2 to 10, wherein the stellarator is formed by a plurality of interconnected modules (8), preferably individually removable from the stellarator, wherein each module comprises a respective subset of the non-planar, superconducting coils, a respective segment of the plasma vessel, and, optionally a respective segment of the coil support structure.
Embodiment 12. The stellarator according to embodiment 11, wherein each module (8) of the stellarator (1) is formed essentially symmetric with respect to a horizontal symmetry plane (HSP) of the stellarator (1) arranged perpendicular to a height direction (HD) of the stellarator (1); and/or wherein each module (8) of the stellarator (1) is formed essentially symmetric with respect to a respective second symmetry plane (SSP) essentially parallel to the height direction (HD) and essentially perpendicular to the horizontal symmetry plane (HSP); and/or wherein each module (8) of a subset of the interconnected modules comprises a respective segment of the coil support structure that exhibits essentially the same symmetry as the corresponding interconnected module of the stellarator; and/or wherein each interconnected module of a subset of the interconnected modules comprises a respective segment of the coil support structure, comprising one or more groups of essentially identical structure elements.
Embodiment 13. The stellarator according to any of embodiments 1 to 12, wherein the coil support structure comprises an upper support ring, a middle support ring, and a lower support ring, preferably arranged essentially symmetrically with respect to a horizontal symmetry plane of the stellarator perpendicular to a height direction of the stellarator, wherein the upper and the lower support ring are formed by interconnected segments.
Embodiment 14. A computer-implemented method (200) for generating topology input data for optimizing a coil support structure of a stellarator, preferably of a stellarator according to any of embodiments 1 to 13, the method comprising: obtaining (210), based on a predefined magnetic field to be generated by a plurality of non-planar, superconducting coils, geometric data of a plurality of non-planar, superconducting coils and a current, preferably a current for each coil; obtaining (220), based on the geometric data of the plurality of non-planar, superconducting coils, geometric data of an element encompassing the plurality of non-planar, superconducting coils; calculating (230), based on the geometric data of the plurality of non-planar, superconducting coils and the current, preferably the current for each coil, a magnetic field; determining (240), based on the obtained geometric data of the plurality of non-planar, superconducting coils and the calculated magnetic field and the current, preferably the current for each coil, a radial force exerted by the magnetic field on the geometric data of the element; determining (250), based on the obtained geometric data of the plurality of non-planar, superconducting coils and the calculated magnetic field and the current, preferably the current for each coil, local forces exerted by the magnetic field on the geometric data of the element; processing (260) the geometric data of the plurality of non-planar, superconducting coils, the geometric data of the element encompassing the plurality of non-planar, superconducting coils, the radial force and the local forces to provide the topology input data.
Embodiment 15. A computer-implemented method (300) for optimizing a coil support structure of a stellarator, preferably of a stellarator according to any one of embodiments 1 to 13, the method comprising: obtaining (310) topology input data of a stellarator, the topology input data comprising geometric data of a plurality of non-planar, superconducting coils, geometric data of an element encompassing the plurality of non-planar, superconducting coils, and a radial force and local forces exerted by a magnetic field on the geometric data of the element; selecting (320) one or more constraints associated with at least the geometric data of the element and the radial force and the local forces; selecting (330) one or more objective functions associated with at least the geometric data of the element and preferably additional information; modifying (340), based on the obtained topology input data and based on the selected one or more constraints, the geometric data of the element until the selected one or more objective function reaches a first predefined threshold to provide the optimized coil support structure.

### LIST OF REFERENCE NUMERALS

- 1: stellarator
- 8: module of the stellarator
- 10: plasma vessel
- 20: center of the stellarator
- 25: resulting force partially contributing to radial force
- 26: local forces
- 30: support ring(s) of the first structural arrangement
- 30a: upper support ring
- 30b: middle support ring
- 30c: lower support ring
- 31: segment of a support ring
- 32: through holes
- 40: coil casing of the second structural arrangement
- 40': coil center points
- 40a: exemplary coil casing
- 40b: exemplary coil casing
- 41: gussets
- 42: region of abutment
- 43: coil casing segment
- 50: structure elements of the second structural arrangement
- 60: element
- 60': optimized coil support structure
- 200: computer-implemented method for generating topology input data for optimizing a coil support structure of a stellarator
- 210: method step: obtaining
- 220: method step: obtaining
- 230: method step: calculating
- 240: method step: determining
- 250: method step: determining
- 260: method step: processing
- 300: computer-implemented method for optimizing a coil support structure of a stellarator
- 310: method step: obtaining
- 320: method step: selecting
- 330: method step: selecting
- 340: method step: modifying

- HD: height direction
- HSP: horizontal symmetric plane
- L: distance of support rings
- MH_SSA: maximal height dimension of the second structural arrangement
- MR: maximal radius of the stellarator
- RD: radial direction
- RDFPV: radial distance from plasma vessel
- SSP: second symmetry plane
- TD: toroidal direction
- t_r: thickness of at least one of the one or more support rings in a radial direction

## Claims

1. A stellarator (1) comprising:
a plurality of non-planar, superconducting coils, for generating a magnetic field for confining a plasma inside a plasma vessel; and
a coil support structure (30, 40, 50) comprising:
a first structural arrangement (30) arranged between a center (20) of the stellarator and the plasma vessel and configured to balance a radial force exerted by the magnetic field on the plurality of coils;
a second structural arrangement (40, 50) configured to balance local forces exerted by the magnetic field on one or more coil segments of the plurality of coils;
wherein the local forces cause at least a toroidal motion of the one or more segments of the plurality of coils,
**characterized in that** the first structural arrangement (30) comprises one or more support rings (30), wherein a thickness of at least one of the one or more support rings (30) in a height direction of the stellarator (1) varies along a circumference of the stellarator in the toroidal direction of the stellarator.

2. The stellarator of claim 1,
wherein the first structural arrangement (30) comprises at least one recess, preferably at least one through hole (32).

3. The stellarator of claim 1 or claim 2,
wherein one or more of the support rings (30) comprise a plurality of segments (31), preferably at least two and at most 20 segments (31), wherein at least some of the segments are configured to be releasably coupled to one another, and/or
wherein the stellarator (1) comprises a same number of corresponding modules (8) and/or
wherein one or more of the support rings comprise a plurality of separate segments (31) that are not connected to each other, and / or
wherein one or more of the segments extend along a toroidal angle of the stellarator between 10° and 120°.

4. The stellarator of any one of claims 1 to 3,
wherein the one or more support rings (30) are distributed within a height range (L) of 20% to 80% of a maximal height dimension (MH_SSA) of the second structural arrangement (40, 50).

5. The stellarator of any one of claims 1 to 4,
wherein the one or more support rings are distributed in an essentially symmetric arrangement with respect to a horizontal symmetry plane (HSP) of the stellarator perpendicular to a height direction (HD) of the stellarator.

6. The stellarator of any one of the preceding claims 1 to 5,
wherein the second structural arrangement (40, 50) comprises a plurality of coil casings (40) for the plurality of coils, preferably one coil casing (40) for each coil,
wherein one or more of the plurality of coil casings (40) are coupled, preferably releasably, to the first structural arrangement (30),
optionally, wherein one or more of the coil casings (40) have an inhomogeneous mass distribution that increases with distance to the plasma vessel.

7. The stellarator of claim 6,
wherein one or more of the plurality of coil casings are coupled to the one or more support rings via attachment elements (41), preferably attachment gussets, extending, essentially parallel to a height direction (HD) of the stellarator, from an upper portion and / or from a lower portion of the one or more support rings.

8. The stellarator of claim 6 or claim 7,
wherein at least some of the plurality of coil casings (40) are formed such that they abut to each other in a region between the center (20) of the stellarator (1) and the plasma vessel (10) to balance local forces between segments of neighboring coils.

9. The stellarator of any one of claims 1 to 8,
wherein the second structural arrangement comprises a plurality of structure elements (50) arranged at least partially between neighboring coil casings (40) and are configured to balance local forces between segments of neighboring coils.

10. The stellarator of claim 9,
wherein one or more of the structure elements (50) have one or more of following: a plate shape, a beam shape, or a truss shape,
wherein, preferably, the plate shape has eight to twenty corners and/or convex outer faces and/or concave outer faces; and / or
wherein the structure elements (50) have a maximum thickness of at least 50 mm and of at most 1500 mm; and / or
wherein the second structural arrangement comprises one or more openings between a subset of neighboring structure elements, wherein, optionally, a total area of the openings is between 10% and 50% of a total surface area of an envelope surface defined by an outer surface of the structure elements; and / or
wherein at least some of the structure elements are configured to be releasably coupled to one or more neighboring structure elements.

11. The stellarator of any one of claims 1 to 10,
wherein the thickness in the height direction varies between 100 mm and 1500 mm along the circumference of the stellarator, and / or
wherein the thickness (t_r) in the radial direction varies between 100 mm and 6000 mm; and / or
wherein a ratio of the thickness (t_r) in the radial direction to the thickness in the height direction varies between 1.0 to 60.0 along the circumference of the stellarator; and / or
wherein a ratio of the thickness (t_r) in the radial direction to a maximal radius of the stellarator varies between 0.5 % to 50%; and / or wherein a ratio of the thickness in the height direction to a maximal height dimension of the stellarator varies between 0.5 % and 50%.

12. The stellarator of any one of claims 2 to 11,
wherein the stellarator is formed by a plurality of interconnected modules (8), preferably individually removable from the stellarator, wherein each module comprises a respective subset of the non-planar, superconducting coils, a respective segment of the plasma vessel, and, optionally a respective segment of the coil support structure.

13. The stellarator of claim 12,
wherein each module (8) of the stellarator (1) is formed essentially symmetric with respect to a horizontal symmetry plane (HSP) of the stellarator (1) arranged perpendicular to a height direction (HD) of the stellarator (1); and / or
wherein each module (8) of the stellarator (1) is formed essentially symmetric with respect to a respective second symmetry plane (SSP) essentially parallel to the height direction (HD) and essentially perpendicular to the horizontal symmetry plane (HSP); and/or
wherein each module (8) of a subset of the interconnected modules comprises a respective segment of the coil support structure that exhibits essentially the same symmetry as the corresponding interconnected module of the stellarator; and / or
wherein each interconnected module of a subset of the interconnected modules comprises a respective segment of the coil support structure, comprising one or more groups of essentially identical structure elements.

14. The stellarator of any one of claims 1 to 13,
wherein the coil support structure comprises an upper support ring, a middle support ring, and a lower support ring, preferably arranged essentially symmetrically with respect to a horizontal symmetry plane of the stellarator perpendicular to a height direction of the stellarator,
wherein the upper and the lower support ring are formed by interconnected segments.

15. The stellarator of any one of claims 1 to 14, wherein the local forces cause a toroidal deformation of the one or more segments of the plurality of coils.
